# EUROPEAN PATENT APPLICATION

(11) **EP 4 517 585 A1**
(43) Date of publication of application: **05.03.2025**
(21) Application number: 24191657.6
(22) Date of filing: 30.07.2024
(51) Int. Cl.: G06N 3/045, G06N 3/0464, G06N 3/048, G06N 3/09, G06V 10/62, G06V 10/82, G06V 20/40

(54) **LONG DURATION STRUCTURED VIDEO ACTION SEGMENTATION**

(30) Priority: 01.09.2023 US 202318459824
(71) Applicant: Intel Corporation, Santa Clara, CA 95054 (US)
(72) Inventor: RHODES, Anthony Daniel, Santa Clara, 95054 (US); MIN, Byungsu, Santa Clara, 95054 (US); TRIPATHI, Subarna, Santa Clara, 95054 (US); RAFFA, Giuseppe, Santa Clara, 95054 (US); BISWAS, Sovan, Santa Clara, 95054 (US)
(74) Representative: Rummler, Felix

(57) **Abstract**

Machine learning models can process a video and generate outputs such as action segmentation assigning portions of the video to a particular action, or action classification assigning an action class for each frame of the video. Some machine learning models can accurately make predictions for short videos but may not be particularly suited for performing action segmentation for long duration, structured videos. An effective machine learning model may include a hybrid architecture involving a temporal convolutional network and a bidirectional graph neural network. The machine learning model can process long duration structured videos by using a temporal convolutional network as a first pass action segmentation model to generate rich, frame-wise features. The frame-wise features can be converted into a graph having forward edges and backward edges. A graph neural network can process the graph to refine a final fine-grain per-frame action prediction.

## Description

### Background

Machine learning models (e.g., deep learning models, deep neural networks, convolutional neural networks, transformer-based models, etc.) are used in a variety of artificial intelligence and machine learning applications such as computer vision, speech recognition, and natural language processing. Machine learning models may receive and process input such as images, videos, audio, speech, text, etc. Machine learning models can generate outputs, such as features and predictions, based on the input.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure (FIG.) 1 illustrates an exemplary machine learning model for processing one or more inputs (e.g., video having a sequence of image frames) and generating one or more outputs, according to some embodiments of the disclosure.
FIG. 2 illustrates another exemplary machine learning model for processing one or more inputs (e.g., video having a sequence of image frames) and generating one or more outputs, according to some embodiments of the disclosure.
FIG. 3 illustrates an exemplary component of a temporal convolutional network, according to some embodiments of the disclosure.
FIG. 4 illustrates another exemplary component of a temporal convolutional network, according to some embodiments of the disclosure.
FIG. 5 illustrates different types of edges of a bi-directional graph, according to some embodiments of the disclosure.
FIG.6 illustrates a converter to generate a graph, according to some embodiments of the disclosure.
FIG. 7 illustrates exemplary temporal skip connections, according to some embodiments of the disclosure.
FIG. 8 illustrates a graph neural network to generate predictions on a graph, according to some embodiments of the disclosure.
FIG. 9 illustrates an exemplary implementation of a graph neural network to generate predictions on a graph, according to some embodiments of the disclosure.
FIG. 10 illustrates training and calculating a loss function for a temporal convolutional network, according to some embodiments of the disclosure.
FIG. 11 illustrates training and calculating a loss function for a graph neural network, according to some embodiments of the disclosure.
FIG. 12 is a flowchart showing a method for making predictions, according to some embodiments of the disclosure.
FIG. 13 is a block diagram of an exemplary computing device, according to some embodiments of the disclosure.

### Detailed Description

### Overview

Machine learning models can be used in automation in a variety of contexts, such as robotics, industrial monitoring, industrial automation, etc. In some real-world automation domains, videos may be processed to obtain frame-level action segmentation across complex, long duration videos (e.g., a video capturing footage inside a food processing facility, a video capturing footage inside commercial kitchen, a video capturing footage inside pharmaceutical manufacturing facility, etc.). Some automation domains may want to achieve fine-grain action prediction (e.g., a system able to predict accurately between a few dozen action classes). Some automation domains may have long-tail data distributions. For example, in some manufacturing applications, the "idle" action class (e.g., nothing is happening) can dominate or can be the predominant class. Some automation domains may have hard-to-differentiate action classes. It is not trivial to implement a machine learning model that can perform well. For example, different action classes may share strong visual similarities.

Machine learning models can process a video and generate outputs such as action segmentation assigning portions of the video to a particular action, or action classification assigning an action class for each frame of the video. Some machine learning models can accurately make predictions for short videos but may not be particularly suited for performing action segmentation for long duration, structured videos.

An effective machine learning model may include a hybrid architecture involving a temporal convolutional network and a bi-directional graph neural network. The hybrid architecture can achieve good performance and strong robustness when generating fine-grain action predictions. The machine learning model can process a sequence of frames or sequence of video frames (e.g., long duration structured videos), and output per-frame action class predictions.

The temporal convolutional network can be a lightweight and/or compact version of a temporal convolutional network. The temporal convolutional network can use one-dimensional (1-D) convolution operators to capture long duration dependencies across the entire input (across time). The temporal convolutional network can predict structured processes. For example, in industrial manufacturing, a sequence of actions may be expected such as action 1 → action 2 → action 3 4.... The temporal convolutional network can act as part of a "first pass" action segmentation model to generate rich, frame-wise features. In some embodiments, the frame-wise features are taken from an output of a layer (e.g., a penultimate layer, second-to-the-last layer, an intermediate layer, a hidden layer, or not the final output layer) in the temporal convolutional neural network. The temporal convolutional network can capture long duration dependencies across the entire input. The temporal convolutional network can include components that can perform dilation with different dilation rates to extract temporal information with a large effective receptive field.

In some embodiments, the temporal convolutional network receives one or more frame-wise inputs (e.g., a set of frame-wise inputs, or a number of frame-wise inputs) that is generated by a convolutional neural network processing a video having a sequence of frames. The convolutional neural network can include a three-dimensional convolutional neural network. The convolutional neural network can perform spatial-temporal convolutions to extract spatial-temporal features for each frame.

The frame-wise features can be converted into a graph having one or more forward edges and one or more backward edges. In some embodiments, the graph may have un-directed edges. In some embodiments, the graph may have one or more forward edges, one or more backward edges, and one or more un-directed edges. The graph can have nodes that correspond to the frames of the sequence of frames. Frame-wise features can be compared between frames to determine whether to connect two nodes corresponding to the two frames with an edge. In some embodiments, values may be assigned to the edge based on the comparison. In some embodiments, temporal skip connections having a certain size can be inserted into the graph for additional message passing between nodes. The size may be set based on a variable, parameter, or hyperparameter which is adjustable by a user.

The bi-directional graph neural network can be a sparse model. A graph neural network can process the graph to refine a final fine-grain per-frame action prediction. The graph neural network can utilize concurrent temporal forward and backward local message passing operations.

While some of the examples described herein refer to a machine learning model processing a video having a temporal sequence of frames or image frames, the machine learning models envisioned by the disclosure can be used to process other types of input data involving a time sequence of frames or time sequence of data captures such as sequence of audio frames, sequence of sensor data captures, sequence of depth image frames, etc. In some cases, machine learning models envisioned by the disclosure may be used to process a time sequence of frames or data captures involving sensor data having different sensor modalities. In some cases, machine learning models envisioned by the disclosure may be used to process a time sequence of frames or data captures involving sensor data having views or field of views.

While some of the examples described herein refer to action segmentation and/or making action class predictions per frame, the machine learning models envisioned by the disclosure can be used to generate other kinds of predictions for the frame, such as other classifications, active speaker identification, salient object identification, frame caption determination, frame label determination, frame semantic meaning determination, activity recognition, rule violation determination, emergency situation determination, safety risk determination, forecasting, object localization, boundary predictions, etc.

Implementing a machine learning model using the hybrid architecture described herein can make sense of difficult-to-classify long duration, structured videos. Making sense of video data can be a ubiquitous challenge for deployable artificial intelligence systems, e.g., in the automation domain. Precise, fine-grain action segmentation for real-world long duration videos is not a trivial task in computer vision. The hybrid architecture can leverage a temporal convolutional network to learn long duration temporal dependencies and can leverage the graph neural network to learn from local evidence between nearby frames.

### Exemplary machine learning models and parts thereof

A machine learning model refers to computer-implemented systems that can perform one or more tasks. A machine learning model can take an input and generate an output for the task at hand. Using and implementing a machine learning model may involve supervised learning, unsupervised learning, semi-supervised learning, and reinforcement learning. A machine learning model can be implemented in different ways. A machine learning model can include one or more of: an artificial neural network, a decision tree, a support vector machine, regression analysis, a Bayesian network, a Gaussian process, a genetic algorithm, etc.

An artificial neural network may include one or more layers, modules, networks, blocks and/or operator that transform the input into an output. In some embodiments, a layer, module, network, block and/or operator may include one or more processing units and/or one or more processing nodes. A processing unit may receive one or more inputs, perform a processing function or operation, and generate one or more outputs. Processing units may be interconnected to form a network. In some cases, the processing units or nodes may be referred to as neurons. Different types of processing units or nodes may be distinguished by the processing function/operation that is being performed by the processing units or nodes. A processing unit may include one or more parameters. The parameters may be trained or learned. A processing unit may include one or more hyperparameters. Hyperparameters may be set or tuned, adjusted, or set by one or more users of the machine learning model.

One type of processing unit is a convolution block and/or operator. The processing unit applies a convolution operation to the input and generates an output. The convolution operation may extract features from the input and output the features as the output. The convolution operation may transform the input and generate an output. The processing unit may convolve the input with a kernel to generate an output. A kernel may include a matrix. The kernel may encode a function or operation that can transform the input. The kernel may include values or parameters that can be trained or learned. The processing unit may compute inner products (e.g., dot products) with a sliding/moving window capturing local regions or patches of the input and sum and/or accumulate the inner products to generate an output. Inner products may be computed successively across the input matrix, as the sliding/moving windows move across the input matrix. A convolution block and/or operator may be defined by the size of the kernel, e.g., a 1×1 convolution (a convolutional operator having a kernel size of 1×1), a 2×2 convolution(a convolutional operator having a kernel size of 2×2), a 3×3 convolution (a convolutional operator having a kernel size of 3×3), a 4×4 convolution (a convolutional operator having a kernel size of 4×4), a 5×5 convolution (a convolutional operator having a kernel size of 5×5), and so forth. The distance the window slides/moves can be set or defined by the stride of the convolution operator. In some cases, the convolution block and/or operator may apply no padding and uses the input matrix as-is. In some cases, the convolution block and/or operator may apply half padding and pads around a part of the input matrix. In some cases, the convolution block and/or operator may apply full padding and pads around the input matrix. In some cases, the convolution block and/or operator may be defined by a dimension of the filter being applied. For example, a 1-D convolution block and/or operator may apply a sliding convolution filter or kernel of size k (a hyperparameter) to one-dimensional input. Values in the sliding convolution filter or kernel can be trained and/or learned.

An exemplary layer, module, block and/or operator may include a dilation convolution block may increase can extract features at various scales. A dilation convolution block may expand the kernel by inserting gaps between the weights in the kernel. A dilation convolution module may have a dilation rate or dilation factor which indicates how much the kernel is widened. Parameters in the kernel can be trained or learned.

Another type of processing unit is a transformer unit or block. A transformer unit may be used in a transformer block. A transformer unit may implement an attention mechanism to extract dependencies between different parts of the input to the transformer unit. A transformer unit may receive an input and generate an output that represents the significance or attention of various parts of the input. A transformer unit may include query weights, key weights, and value weights as parameters that can be trained or learned. A transformer unit may apply the parameters to extract relational information between different parts of the input to the transformer unit.

Another type of processing unit is an activation unit or block. An activation block may implement or apply an activation function (e.g., a sigmoid function, a non-linear function, hyperbolic tangent function, rectified linear unit, leaky rectified linear unit, parametric rectified linear unit, sigmoid linear unit, exponential linear unit, scaled exponential linear function, logistic activation function, Heaviside activation function, identity function, binary step function, soft step function, Gaussian error linear unit, Gaussian function, softplus function, etc.) to an input to the activation block and generate an output. An activation block can be used to map an input to the block to a value between 0 and 1. An activation block can be used to map an input to the block to a 0 or a 1. An activation block can introduce non-linearity. An activation block can learn complex decision boundaries. One or more parameters of the activation function can be trained or learned.

An exemplary layer, module, block, or operator may include an upsampling block. An upsampling block may increase the size of the input features or feature maps. An upsampling block may synthesize values that can be added to the input features or feature maps to increase the size and output features or feature maps that are upsampled.

An exemplary layer, module, block, or operator may include a downsampling block. A downsampling block may perform downsampling of features or feature maps generated by the stages, which may improve running efficiency of machine learning model. A downsampling block may include a pooling layer, which may receive feature maps at its input and applies a pooling operation to the feature maps. The output of the pooling layer can be provided or inputted into a subsequent stage for further processing. The pooling operation can reduce the size of the feature maps while preserving their (important) characteristics. Accordingly, the pooling operation may improve the efficiency and can avoid over-learning. A pooling layer may perform the pooling operation through average pooling (calculating the average value for each patch on the feature map), max pooling (calculating the maximum value for each patch of the feature map), or a combination of both. The size of an output of a pooling layer is smaller than the size of the feature maps provided as input to the pooling layer. In some embodiments, the pooling operation is 2×2 pixels applied with a stride of 2 pixels, so that the pooling operation reduces the size of a feature map by a factor of 2, e.g., the number of pixels or values in the feature map is reduced to one quarter the size. In some embodiments, a pooling layer applied to a feature map of 6×6 results in an output pooled feature map of 3×3.

An exemplary layer, module, block, or operator may include a projection layer (sometimes referred to as a 1×1 convolution block and/or operator). A projection layer may transform input features into a new space, such as a space that is suitable, informative, and/or useful for tasks being performed by modules downstream (for processing by modules downstream). A projection layer may include a dense layer, or a fully connected layer where each neuron (e.g., a node or processing unit in a neural network) is connected to every neuron of the previous layer. A projection layer may generate and/or output one or more new features (e.g., a new set of features) that are more abstract or high-level than features in the input. A projection layer may implement one or more 1×1 convolution operations, where the projection layer may convolve the input features with filters of size 1×1 (e.g., with zero-padding and a stride of 1). A projection layer may implement channel-wise pooling or feature map pooling. A projection layer may reduce dimensionality of the input features by pooling features across channels. A projection layer may implement a 1×1 filter to create a linear projection of a stack of feature maps. A projection layer may implement a 1×1 filter to increase the number of feature maps. A projection layer may implement a 1×1 filter to decrease the number of channels. A projection layer may make the feature maps compatible with subsequent processing layers, modules, blocks, or operators. A projection layer may ensure that an element-wise adding operation can be performed to add the output of the projection layer and another feature map. A projection layer can ensure the dimensionality of the output of the projection layer matches the dimensionality of the feature map being element-wise added together. Parameters of the projection layer can be trained or learned.

An exemplary block may include an adder block. An adder block may perform element-wise adding of two or more inputs to generate an output. An adder block can be an exemplary block that can merge and/or combine two or more inputs together. Adding and summing may be synonymous. An adder block may be replaced by a concatenate block.

An exemplary block may include a multiplier block. A multiplier block may perform element-wise multiplication of two or more inputs to generate an output. A multiplier block may determine a Hadamard product.

An exemplary block may include a concatenate block. A concatenate block may perform concatenation of two or more inputs to generate an output. A concatenate block may append vectors and/or matrices in the inputs to form a new vector and/or matrix. Vector concatenation can be appended to form a larger vector. Matrix concatenation can be performed horizontally, vertically, or in a merged fashion. Horizontal matrix concatenation can be performed by concatenating matrices (that have the same height) in the inputs width-wise. Vertical matrix concatenation can be performed by concatenating matrices (that have the same width) in the inputs height-wise. A concatenate block can be an exemplary block that can merge and/or combine two or more inputs together. A concatenate block may be suitable when the two or more inputs do not have the same dimensions. A concatenate block may be suitable when it is desirable to keep the two or more inputs unchanged or intact (e.g., to not lose information). A concatenate block may be replaced by an adder block.

### Exemplary machine learning models for making predictions about a video

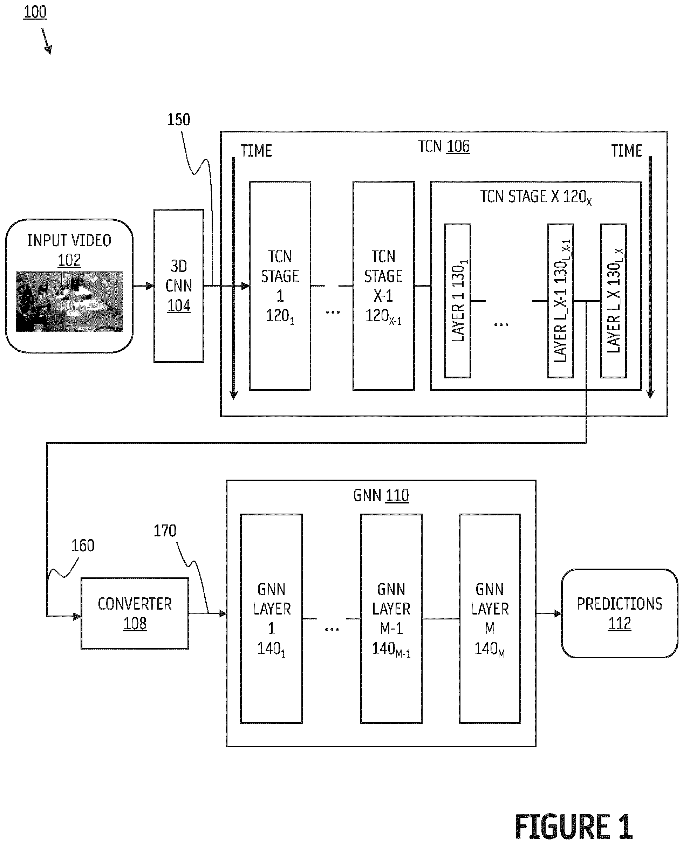

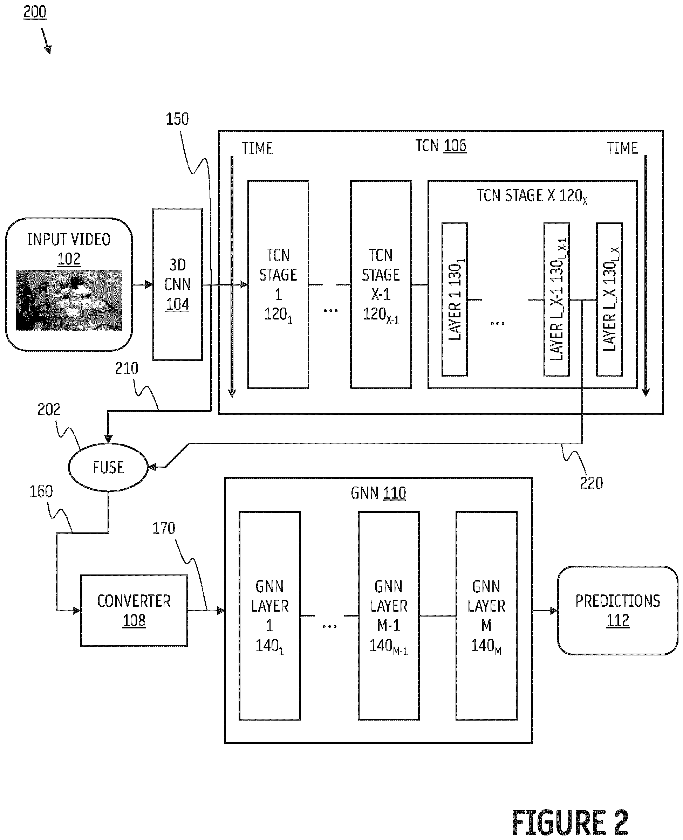

FIG. 1 illustrates exemplary machine learning model 100 for processing one or more inputs and generating one or more outputs, according to some embodiments of the disclosure. FIG. 2 illustrates exemplary machine learning model 200 for processing one or more inputs and generating one or more outputs, according to some embodiments of the disclosure. An example of the one or more inputs can include input video 102 having a temporal sequence of frames or image frames. For various examples herein, the input video 102 may have N number of frames, or frames corresponding to N different timestamps or time instances. An example of the one or more outputs can include predictions 112. Machine learning model 100 and/or machine learning model 200 can include temporal convolutional network (TCN) 106, a converter 108, and a graph neural network (GNN) 110.

TCN 106 can capture long duration dependencies in the input, e.g., input video 102. TCN 106 can leverage the long duration dependencies and perform frame-wise action classification, e.g., make predictions about each frame in the input video 102. In some embodiments, TCN 106 may include a plurality of layers, or convolutional neural network layers. TCN 106 can include dilated layers or dilated convolution layers, e.g., layer 1130₁, ..., layer L_X-1 130_{L_X-1}, and layer L_X 130_{L_X}. L_X may represent a number of layers for an X^{th} stage in TCN 106. A dilated layer or dilated convolution layer performs one or more dilated convolutions. In some cases, TCN 106 may include one or more stages, and each stage may have one or more layers or convolutional neural network layers. The number of layers in two different stage may differ, or may be the same. TCN 106 can apply one or more dilated convolutions with one or more (varying or different) dilation rates.

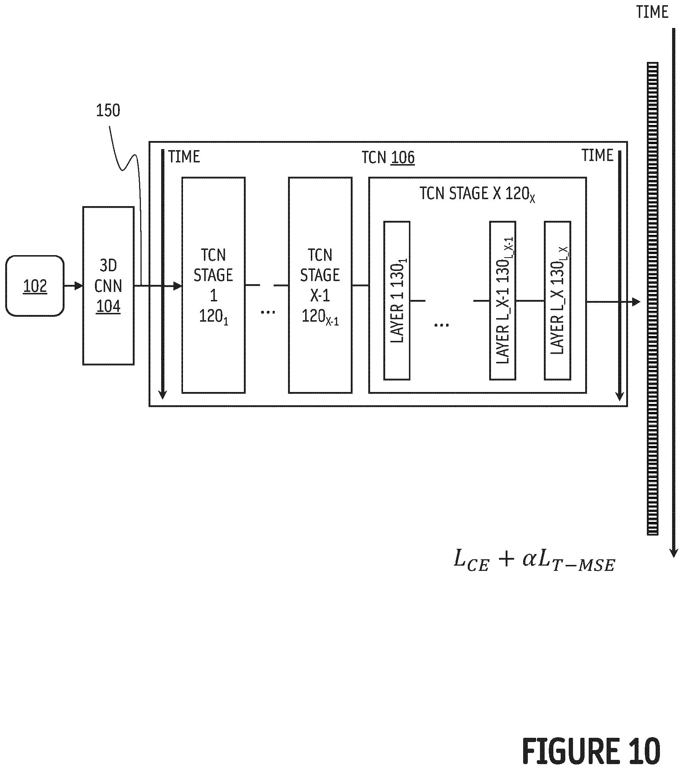

In some embodiments, TCN 106 may include processing blocks. The processing blocks may form a layer of TCN 106. A layer may include a plurality of processing blocks. Processing blocks of one layer may be connected to processing blocks of a subsequent layer. A processing block of one layer can be connected to a subset of processing blocks of a subsequent layer (e.g., not densely connected to all processing blocks of a subsequent layer). Processing blocks of one layer may be connected causally to processing blocks of a subsequent layer to perform causal convolution operations (e.g., where convolution operations may depend only on a current input value and/or past input values in time). When processing blocks are connected causally, TCN 106 may receive and process a stream of frame-wise inputs in real time. Processing blocks of one layer may be connected acausally to processing blocks of a subsequent layer to perform acausal convolution operations (or convolution operations that are agnostic as to causality or timing dependences, and may depend on a current input value, future input values in time, and/or past input values in time). When processing blocks are connected acausally, TCN 106 may receive and process frame-wise inputs offline (as opposed to in real time). In some embodiments, the processing blocks may be arranged and/or connected together to form TCN 106. The processing blocks may be implemented efficiently using relatively lightweight operators. An exemplary processing block may include one or more 1-D convolution operators, which may be computationally efficient. In some embodiments, processing blocks can implement dilated convolution operations, e.g., 1-D dilated convolution operations. An exemplary processing block may include a residual connection to improve feature processing efficiency. Exemplary components or building blocks of TCN 106 are illustrated with figures (FIGS.) 3-4. Additional details relating to training of TCN 106 are described with FIG. 10.

In some embodiments, a layer in TCN 106 may include processing blocks having a specific configuration across the layer. A layer may include processing blocks having one or more associated dilation rates across the layer. The dilated convolution operations performed by processing blocks arranged in a series of layers or successive layers can have different configurations and/or dilation rates. Dilation rates can vary depending on layer (the position of the layer, e.g., depth of the layer within TCN 106). Varying the configuration and/or dilation rates over the series of layers or successive layers can increase an effective receptive field of TCN 106. A larger receptive field of TCN 106 can allow TCN 106 to learn long-range temporal dependencies in the input video 102.

In some embodiments, TCN 106 may include a single stage (X=1). In some embodiments, TCN 106 may include a plurality of (successive) stages or X number of stages (X>1), e.g., TCN Stage 1 120₁, ..., TCN Stage X-1 120_{X-1}, and TCN Stage X 120_{X}. A multi-stage architecture can refine a prediction process performed by TCN 106 and enhance the predictive performance ofTCN 106. Each stage may include one or more layers. Implementation within two different stages can differ or can be the same. Stages may include different number of layers. Stages may vary dilation rates across layers differently. Stages may include different implementations of processing blocks across layers. In some embodiments, TCN 106 may include one or more prediction stages (e.g., a low level stage near the input) to process the one or more frame-wise inputs. TCN 106 may include one or more refinement stages (e.g., one or more higher level stages near the output) to process outputs of the prediction stage. In some embodiments, TCN 106 may include X=4 stages. In some embodiments, TCN 106 may include a prediction stage, and 3 refinement stages.

TCN 106 can receive and/or process one or more frame-wise inputs 150 (e.g., a set of frame-wise inputs 150, a number of frame-wise input, or an input per frame). One or more frame-wise inputs 150 (e.g., a set of frame-wise inputs 150) can be input into TCN 106. TCN 106 can include a number of inputs, W_{I}. In some cases, W_{I} is equal to or greater than N, and TCN 106 can process all frames of the input. In some cases, TCN 106 processes frame-wise inputs in batches. The number of inputs, W_{I}, may be less than N, and may be equal to or greater than the batch size. TCN 106 may process segments of the input (e.g., in batches) rather than the whole input.

The frame-wise inputs 150 can correspond to or be associated with a sequence of frames or image frames of a video (input video 102). In some embodiments, the frame-wise inputs 150 associated with a sequence of frames can include frame-wise feature embeddings or extracted features for each frame. The frame-wise inputs 150 may include a first frame-wise input comprising a first vector of features extracted from a first frame in the sequence of frames, and a second frame-wise input comprising a second vector of features extracted from a second frame in the sequence of frames. In some embodiments, the frame-wise inputs 150 associated with a sequence of frames can include raw (unprocessed) data or information or filtered data or information for each frame. The frame-wise inputs 150 may include a first frame-wise input comprising a first frame in the sequence of frames, and a second frame-wise input comprising a second frame in the sequence of frames.

TCN 106 can extract and/or output one or more frame-wise features (e.g., a set of frame-wise features, a feature vector per each frame, a feature embedding per frame, an array of features per frame, etc.). TCN 106 can generate the one or more frame-wise features, e.g., based on the one or more frame-wise inputs 150. Frame-wise features may include a collection of features for each frame and/or at each timestamp. Frame-wise features may include, e.g., frame-wise arrays or vectors of values, logits, raw scores, or unnormalized scores, associated with the task to be performed by TCN 106. Size of the array or length of the vector may correspond to the number of classes, C. These outputs may be outputs of a penultimate (second-to-the-last) layer in TCN 106 or may be generated by the penultimate layer in TCN 106. An example of a second-to-the-last layer or penultimate layer of TCN 106 is layer L_X-1 130_{L_X-1}. In some cases, the one or more frame-wise features may include outputs of other intermediate/hidden layers in TCN 106, if desired. The frame-wise sets or vectors of values may be referred to as the one or more frame-wise features, one or more frame-wise penultimate layer embeddings or one or more frame-wise penultimate layer feature embeddings of TCN 106.

TCN 106 may include a final layer after the penultimate layer that translates frame-wise arrays or vectors of values into frame-wise predictions, e.g., frame-wise arrays or vectors of probabilities indicating likelihood of a given frame belonging to each one of the classes. The final layer may have processing blocks that each implement an activation function such as a softmax activation so that the frame-wise array or vector of probabilities sum to 1. The final layer of TCN 106 may have a number of outputs, Wo. Wo can be equal to W_{I}. An example of the final layer of TCN 106 is layer L_X 130_{L_X}. An output may produce an array or a vector of one or more values corresponding to one or more predictions of a frame, e.g., one or more class predictions of the frame, one or more forecast predictions of the frame, etc. Size of the array or length of the vector may correspond to the number of classes, C. In some embodiments, the outputs from the final layer may be used by converter 108 and/or input into converter 108 to generate graph 170. The outputs from the final layer may have less information than the outputs from the penultimate layer of TCN 106.

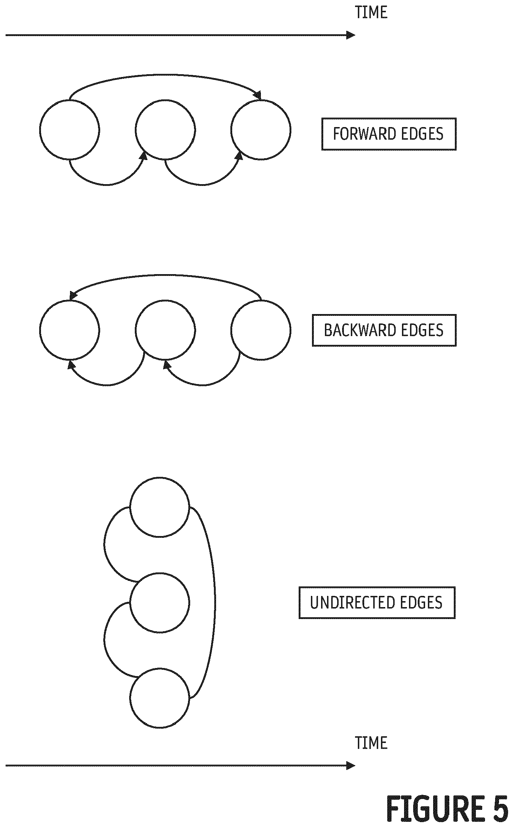

Converter 108 can generate a graph 170 that can be processed by GNN 110. One or more frame-wise features 160 (e.g., a set of frame-wise features 160) can be input into converter 108. Converter 108 may receive one or more frame-wise features 160 or information corresponding to different frames. Converter 108 may translate the one or more frame-wise features 160 into graph 170. Converter 108 may generate graph 170. Graph 170 can include one or more nodes and one or more edges that connect nodes. A node may correspond to a frame. An edge may represent a connection between frame-wise features of two frames. Graph 170 can encode or represent, in graph form, presence and/or strength of relationships or connections between different frames. Converter 108 can compare different frame-wise features and produce graph 170 based on the comparisons. In some cases, nodes may correspond to frames. In some cases, nodes may correspond to each feature (or class) in each frame/timestamp. Nodes may have corresponding values or sets of values. Edges may encode information about whether and/or how two nodes are related to each other. Edges may represent connections between frame-wise features 160 of two frames. Edges may have corresponding values. An edge may encode and/or have a value that may represent a comparison of frame-wise features between two frames. Graph 170 may have different types of edges. Some edges may be directional (e.g., forward edge corresponding to a connection going forward in time, backward edge corresponding to a connection going backward in time). Some edges may be un-directed. Directionality of edges may encode temporal relationships. Additional details relating to graph 170 (including its nodes and edges) are described with FIGS. 5-7.

In some embodiments, TCN 106 can receive image frames of input video 120 as frame-wise inputs 150. Image frames of input video 120 may be input into TCN 106. In some embodiments, machine learning model 100 and/or machine learning model 200 can further include an additional model, filter, or processing network to process image frames of input video 120 to generate and/or output one or more frame-wise features to be used as the one or more frame-wise inputs 150 for TCN 106. In some cases, input video 120 is provided to and/or input into a convolutional neural network or a deep neural network to extract the one or more frame-wise features or frame-wise feature embeddings. In some cases, input video 120 is provided to and/or input into a three-dimensional convolutional neural network (3D CNN) 104 for processing. 3D CNN 104 can extract and/or generate one or more frame-wise features or frame-wise feature embeddings from information in the image space and information in the temporal space of the input video 130. 3D CNN 104 can include operations where a kernel can move in three directions (e.g., width and height directions of the image space, and time direction of the temporal space) to perform spatial-temporal convolutions. As a result, 3D CNN 104 can extract one or more frame-wise features or frame-wise feature embeddings to be used as one or more frame-wise inputs 150 for TCN 106 that may have spatial-temporal information about input video 130. 3D CNN 104 can process the input video 120 (e.g., a sequence of frames), and generate and/or output the one or more frame-wise inputs 150 at the input of TCN 106. Input video 130, e.g., a sequence of frames, can be input into 3D CNN 104. 3D CNN 104 can be used to generate the one or more frame-wise inputs 150 for TCN 106. In some embodiments, input video 130 may be provided to and/or input into other kinds of models to extract one or more frame-wise features or frame-wise feature embeddings to be used as the one or more frame-wise inputs 150 for TCN 106. 3D CNN 104 may extract and/or generate global frame-wise features from input video 120 (e.g., raw video). Examples may include: two-dimensional convolutional neural network, recurrent neural networks (including long short-term memory networks), support vector machines, Markov models, statistical models, interframe motion estimation processing, vision transformer models, etc.

In FIG. 1, converter 108 may receive one or more frame-wise features from TCN 106, e.g., penultimate layer feature embeddings of TCN 106. The one or more frame-wise features from TCN 106 (e.g., a set of frame-wise features 160) may be input into converter 108. Converter 108 may generate graph 170 based on the one or more frame-wise features from TCN 106.

In some cases, converter 108 may receive additional frame-wise information in place of or in addition to one or more frame-wise features from TCN 106. Additional/other frame-wise information may be input into converter 108. In FIG. 2, one or more frame-wise feature embeddings 210 at the output of 3D CNN 104 (e.g., one or more frame-wise inputs 150 to TCN 106) can be fused with one or more frame-wise features 220 from TCN 106 by fusing block 202. Fusing block 202 can receive and/or fuse the one or more frame-wise inputs 150 to TCN 106 and the one or more frame-wise features 220. Fusing block 202 may combine the one or more frame-wise inputs 150 to TCN 106 and the one or more frame-wise features 220 in a suitable manner. Fusing block 202 may perform fusing of features at or on a per-frame basis. Output of fusing block 202 may be input into converter 108. Converter 108 can receive an output of fusing block 202. Converter 108 can generate graph 170 based on the one or more frame-wise features from TCN 106 and further based on the one or more frame-wise inputs 150 to TCN 106 (e.g., one or more frame-wise feature embeddings 210 at the output of 3D CNN 104). Converter 108 can generate graph 170 based on output of fusing block 202 (e.g., the one or more frame-wise features 160).

Fusing block 202 may include a concatenate block to concatenate frame-wise feature embeddings 210 (at the output of 3D CNN 104 or a derivation thereof, such as frame-wise feature embeddings from outputs of a hidden or intermediate layer of 3D CNN 104) with frame-wise features 220 (or a derivation thereof). Fusing block 202 may include a projection layer to change the feature space of the concatenated features, before outputting concatenated features as the one or more frame-wise features 160. Fusing block 202 may include an adder block to (element-wise) sum frame-wise feature embeddings 210 (or a derivation thereof) with frame-wise features 220 (or a derivation thereof). Fusing block 202 may include a neural network layer (which can be trained) to combine frame-wise feature embeddings 210 (or a derivation thereof) with frame-wise features 220 (or a derivation thereof) and generate frame-wise features 160. Fusing block 202 may generate (fused) frame-wise features 160 for converter 108 to convert into graph 170.

The combining or fusing operation performed by fusing block 202 may utilize hyperparameters setting corresponding weights of one or more frame-wise inputs 150 to TCN 106 and the one or more frame-wise features 220. The combining or fusing operation performed by fusing block 202 may utilize trained and/or learned parameters setting corresponding weights of one or more frame-wise inputs 150 to TCN 106 and the one or more frame-wise features 220. Fusing block 202 can output the one or more frame-wise features 160 that is to be used by converter 108 to generate the graph 170.

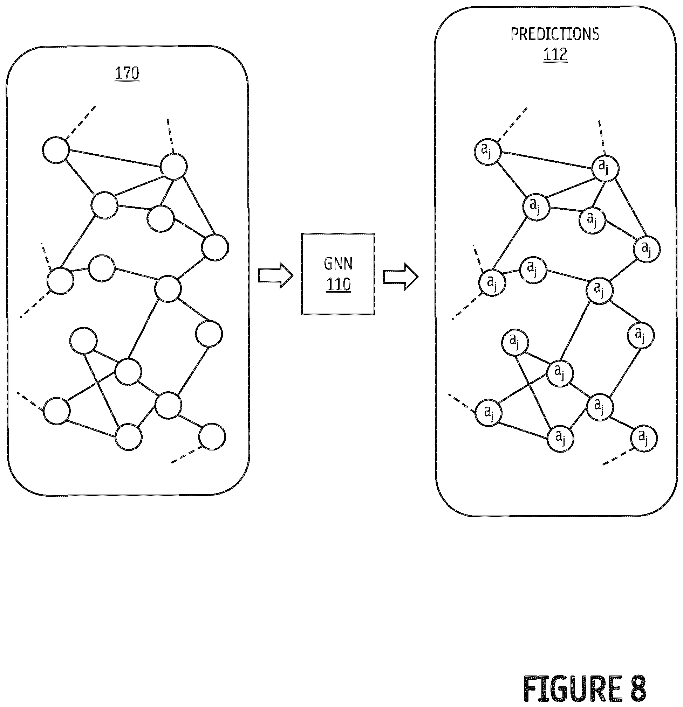

GNN 110 can receive and/or process graph 170 to further leverage information encoded in the edges of graph 170. Graph 170 can be input into GNN 110. GNN 110 can make and/or output one or more predictions 112 for the nodes of graph 170. GNN 110 can generate one or more predictions 112 based on graph 170. GNN 110 can be used to generate one or more predictions 112, e.g., based on graph 170. GNN 110 can perform message aggregation operations on graph 170. GNN 110 may include M number of (successive) layers, e.g., GNN layer 1 140₁, ..., GNN layer M-1 140_{M-1}, GNN layer M 140_{M}. Additional details relating to GNN 110 are described with FIGS. 8-9 and 11. GNN 110 can ingest information extracted by TCN 106 to improve results of TCN 106.

Predictions 112 can include class predictions for the nodes. For example, nodes may correspond to frames of input video 102, and predictions 112 may include for each node, one or more class predictions (e.g., identifying the most likely class to which a frame belongs, a vector having one or more probabilities of the frame belonging to one or more classes). In some cases, nodes may correspond to each feature (or class) in each frame-wise features for each frame/timestamp, and predictions 112 may include for each node a probability of the frame belonging to a specific class or a decision whether the frame belongs to the specific class or not.

### Exemplary implementation of a temporal convolutional network

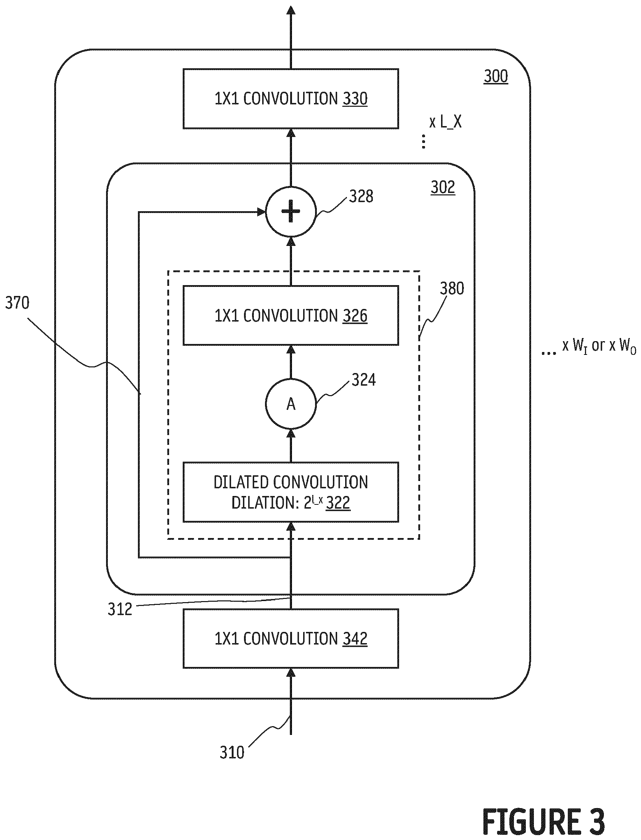

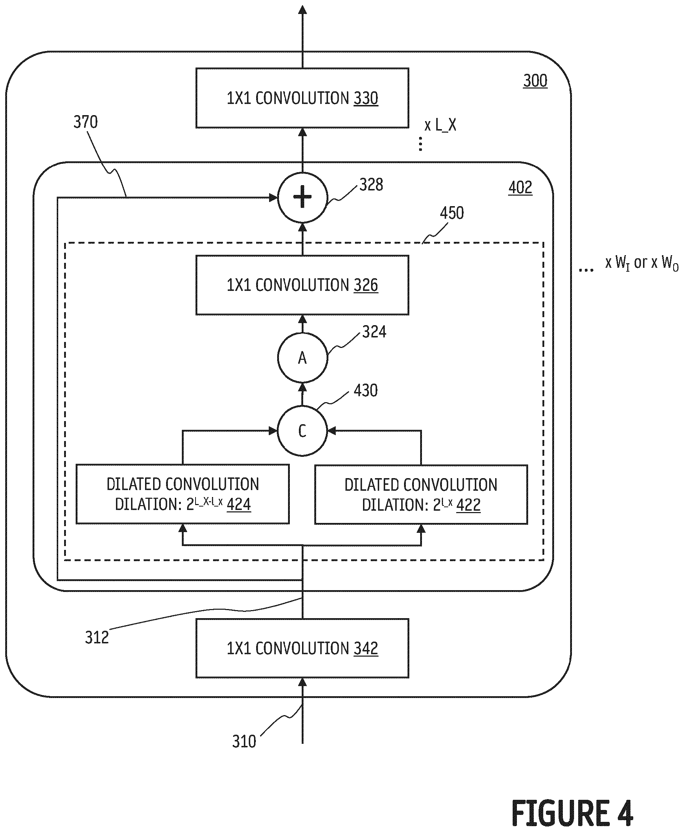

FIG. 3 illustrates an exemplary component 300 of a temporal convolutional network (e.g., TCN 106 of FIG. 1), according to some embodiments of the disclosure. FIG. 4 illustrates another exemplary component 300 of a temporal convolutional network (e.g., TCN 106 of FIG. 1), according to some embodiments of the disclosure. Specifically, FIG. 3 illustrates a processing block 302, and FIG. 4 illustrates a different processing block 402. Component 300 illustrates how to build layers and optionally stages of processing blocks in a TCN to extract temporal information with a large effective receptive field. Component 300 may be replicated and/or repeated to match the number of inputs that the TCN is receiving (e.g., W_{I} = Wo as discussed with FIGS. 1-2). A collection of blocks, such as processing block 302 in component 300 may be replicated and/or repeated to form successive layers in an X^{th} stage of the TCN. A collection of blocks, such as processing block 402 in component 300 may be replicated to form successive layers in an X^{th} stage of the TCN. The number of layers for the X^{th} stage of the TCN may be L_X (upper case). I_x (lower case) may represent a particular layer number and/or a position of the processing block in the X^{th} stage of the TCN (in terms of layers).

Input 310 may be an input (or a single input) out of a one or more frame-wise inputs to a TCN. Input 310, e.g., a frame-wise input, may be processed by a 1x1 convolution operator 342 (e.g., a convolution operator having a kernel size of 1x1). 1x1 convolution operator 342 may be applied for feature dimension standardization, or to standardize feature dimensions of input 310. The 1x1 convolution operator 342 can adjust the dimension of input 310 to match a number of feature maps in the TCN. A 1x1 convolution operator 342 may be provided for each input for the one or more frame-wise inputs to the TCN to form a 1x1 convolutional layer. A TCN that has W_{I} number of inputs may have W_{I} number of 1x1 convolution operators 342 that form a 1x1 convolutional layer.

Output 312 of 1x1 convolution operator 342 may be provided as input to processing block 302 and/or processing block 402. Processing block 302 and/or processing block 402 may be implemented as a residual processing block, e.g., which may facilitate gradient flow. Processing block 302 and/or processing block 402 may include dilated convolution blocks. Processing block 302 may be replicated/repeated to form a dilated layer or dilated convolution layer in TCN. More than one dilated layers or dilated convolution layers may be provided in the TCN using processing block 302 as a building block. Processing block 402 may be replicated/repeated to form a dilated layer or a dilated convolution layer in TCN. More than one dilated layers or dilated convolution layers may be provided in the TCN using processing block 402 as a building block. The dilated layers or dilated convolution layers may have the same number of processing blocks, such as processing block 302 or processing block 402. A dilated layer or a dilated convolution layers may have the same type or variation of a dilated processing block or dilated convolution processing block, such as processing block 302 or processing block 402.

Referring to FIG. 3, processing block 302 has an input path 370 that passes the output 312 of 1×1 convolution operator 342 as an output of input path 370 towards an adder block 328. Processing block 302 may include residual path 380 to perform variable dilation depending on the position of the processing block in the stage or within the TCN (e.g., I_x). Specifically, residual path 380 may include a dilated convolution block 322 having a dilation rate of 2^{I_x}, an activation block 324 to receive and/or process an output of the dilated convolution block 322, and a 1×1 convolution block to receive and/or process an output of the activation block 324. The dilation rate of 2^{I_x} may depend on the position of the dilated convolution layer I_x (within the X^{th} stage of the TCN) in which the processing block 302 is in. In some embodiments, a TCN having a plurality of (successive) dilated convolution layers may implement processing block 302 to double the dilation rate at each layer I_x, e.g., 2^{I_x} = 1, 2, 4, ...., 256, 512, 1024. The dilation rate may double or exponentially increase based on another factor as a position of the dilated convolution block gets deeper or higher in the TCN or the stage of the TCN.

Referring to FIG. 4, processing block 402 has an input path 370 that passes the output 312 of 1x1 convolution operator 342 as an output of input path 370 towards an adder block 328. Processing block 402 may include residual path 450 to perform variable dilation depending on the position of the processing block in the stage or within the TCN (e.g., I_x). Residual path 450 may perform multi-dilation (e.g., dual-dilation), and may have multiple (or dual) dilation rates. For example, residual path 450 may include a first dilated convolution block 424 having a first dilation rate of 2^{L_X-I_x}, a second dilated convolution block having a second dilation rate of 2^{I_x}, a concatenate block 430 to receive and/or perform concatenation an output of the first dilated convolution block 424 and an output of the second dilated convolution block 422, an activation block 324 to receive and/or process an output of the dilated convolution block 322, and a 1×1 convolution block to receive and/or process an output of the activation block 324. The first dilated convolution block 424 and the second dilated convolution block 422 may perform dilation in parallel but at different dilation rates. The first dilation rate may be different from the second dilation rate. The first dilation rate of 2^{L}-^{X-I_x} may depend on the position of the dilated convolution layer I_x in which the processing block 402 is in (within the X^{th} stage of the TCN). The second dilation rate of 2^{I_x} may depend on the position of the dilated convolution layer I_x in which the processing block 402 is in. In some embodiments, a TCN having a plurality of (successive) dual dilated convolution layers may implement processing block 402 to double the second dilation rate at each layer I_x, e.g., 2^{I_x} = 1, 2, 4, ...., 256, 512, 1024, and to halve the first dilation rate at each layer I_x, e.g., 2^{L_X-I_x} = 1024, 512, 256, ...., 8, 4, 2, 1. The second dilation rate may double or exponentially increase based on another factor as a position of the second dilated convolution block gets deeper in the TCN or the stage of the TCN. The first dilation rate may halve or exponentially decrease based on another factor as a position of the first dilated convolution block gets deeper in the TCN or the stage of the TCN.

In some embodiments, an output of processing block 302 or processing block 402 may optionally be processed by and/or input into 1×1 convolution operator 330. Output of 1×1 convolution operator 330 may be provided as input to a next stage in the TCN. 1x1 convolution operator 330 may be applied to obtain frame-wise probabilities of different output classes (as opposed to features). A TCN that has W_{O} number of outputs may have W₀ number of 1x1 convolution operators 330 that form a 1x1 convolutional layer.

### Alternatives to TCN 106 to extract the one or more frame-wise features

TCN 106 illustrated in FIGS. 1-2 may be implemented to perform action segmentation and/or frame-wise action classification. TCN 106 can extract frame-wise features and/or frame-wise feature embeddings that can be used to form predictions. TCN 106 can examine temporal relationships at varying temporal resolutions (e.g., long and short). In some embodiments, at least a portion of the functionality of TCN 106 may be replaced by or supplemented by a different type of model to perform action segmentation and/or frame-wise action classification. Examples of another type of model includes recurrent neural networks, Markov models, conditional random fields, encoder-decoder temporal convolutions, transformer-based models for action segmentation, encoder-decoder structured transformer-based models, graph-based temporal reasoning models.

### Converting frame-wise features into a graph

Information and data can be structured as graphs. Graphs can be used to encode relationships between different pieces of information. The pieces of information can be encoded as nodes of a graph. The relationships between two pieces of information can be encoded as edges of a graph. Referring back to FIGS. 1-2, converter 108 may have the technical task of converting information (e.g., one or more frame-wise features produced by one or more upstream models) into graph 170 which can be processed by and/or input into a GNN.

A graph (e.g., graph 170 of FIGS. 1-2) can include one or more nodes and one or more edges that connect nodes. In some embodiments, nodes may correspond to frames or timestamps. A node may correspond to a frame, or a timestamp. Edges may encode or represent relationships between frames or timestamps. An edge may encode a relationship between two frames or two timestamps. In some embodiments, nodes may correspond to each feature (or class) in each frame/timestamp. One or more nodes may represent one or more features (or one or more classes) of the frame or timestamp. One or more frame-wise features corresponding to different frames may have vectors of feature embeddings corresponding to different frames. A node may correspond to a feature embedding in the vector at a particular frame/timestamp. Nodes may have or encode corresponding values or sets of values.

FIG. 5 illustrates different types of edges of a bi-directional graph, according to some embodiments of the disclosure. Edges may encode or represent information about whether and/or how two nodes are related to each other. Because a node can correspond to a particular frame or timestamp (frame and timestamp may be synonymous), and different nodes may represent different points in time, the nodes can be connected by directed or directional edges to indicate temporal relationships between nodes. A graph may have one or more of the illustrated types of edges. In some embodiments, nodes may represent different features or feature embeddings at the same frame or timestamp, and those nodes can be connected by un-directed edges. A graph can be divided into separate graphs, each having a single type of edges.

In the top portion of FIG. 5, nodes corresponding to different frames or timestamps may be connected with forward edges. A forward edge may connect a node corresponding to a previous timestamp with the node corresponding to a subsequent timestamp to encode a relationship between the two nodes. When a bi-directional graph is processed, the message passing may occur in the direction of the forward edge, e.g., going forward from the node corresponding to a previous timestamp to the node corresponding to a subsequent timestamp. Message passing may be prohibited in the opposite direction.

In the middle portion of FIG. 5, nodes corresponding to different frames or timestamps may be connected with backward edges. A backward edge may connect a node corresponding to a subsequent timestamp with the node corresponding to a previous timestamp to encode a relationship between the two nodes. When a bi-directional graph is processed, the message passing may occur in the direction of the backward edge, e.g., going backward from the node corresponding to a subsequent timestamp to the node corresponding to a previous timestamp. Message passing may be prohibited in the opposite direction.

In the bottom portion of FIG. 5, nodes corresponding to the same frames or timestamps may be connected with un-directed edges. An un-directed edge may connect a node corresponding to a particular timestamp with the node corresponding to the same timestamp to encode a relationship between the two nodes. When a bi-directional graph is processed, the message passing may occur between the two nodes in either direction or both directions. In some embodiments, a single node may be provided for each frame or timestamp, and the graph may have forward edges, backward edges, and no un-directed edges. In some embodiments, one or more nodes may be provided for each frame or timestamp, and the graph may have forward edges, backward edges, and un-directed edges (that connect the one or more nodes at a given frame or timestamp). In some embodiments, un-directed edges may connect nodes corresponding to different frames/timestamps, if un-directed message passing is desired between two nodes corresponding to different frames/timestamps.

Edges having types can help capture relationships and interactions between frames and/or features in different frames, and enrich information being stored in graph 170.

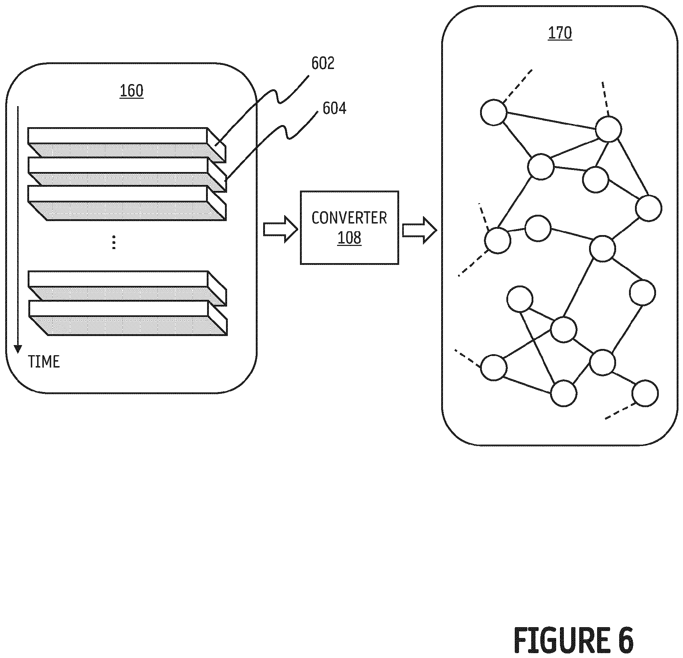

FIG.6 illustrates a converter (e.g., converter 108 of FIGS. 1-2) to generate a graph (e.g., graph 170 of FIGS. 1-2), according to some embodiments of the disclosure. Edges can encode and/or represent relationships and/or interactions between nodes. As depicted, converter 108 can receive one or more frame-wise features 160 (e.g., features or feature embeddings corresponding to each frame or each timestamp). One or more frame-wise features 160 can be input into converter 108. For illustration, the one or more frame-wise features 160 may include first frame-wise features 602 corresponding to a first frame. First frame-wise features 602 may include a first vector (or array) having features and/or feature embeddings. The one or more frame-wise features 160 may include second frame-wise features 604 corresponding to a second frame (e.g., at a subsequent time from the first frame). Second frame-wise features 604 may include a second vector (or array) having features and/or feature embeddings. The first and second vectors have the same size or same number of elements in the vector. The one or more frame-wise features 160 may include additional frame-wise features corresponding to other frames. Converter 108 can generate graph 170 based on the one or more frame-wise features 160. Converter 108 may assign a node for each frame-wise feature or feature embeddings for each frame or each timestamp. Converter 108 may assign a first node for the first frame-wise features 602. Converter 108 may assign a second node for the second frame-wise features 604.

Converter 108 may assign or provision an edge to temporally connect the nodes corresponding to frame-wise features at different frames/timestamps. To determine the relationships and/or interactions between frame-wise features at different frames/timestamps, converter 108 may perform pair-wise comparisons of frame-wise features at different frames/timestamps. For example, converter 108 may compare first frame-wise features 602 corresponding to the first frame with second frame-wise features 604 corresponding to a second frame. Comparing first frame-wise features corresponding to a first frame with second frame-wise features can extract and/or generate information about the relationship and/or interaction between the first frame and the second frame. The information may indicate that a relationship is present or exists between the first frame-wise features of the first frame and the second frame-wise features of the second frame. The information may indicate a strength or extent of the relationship between the first frame-wise features of the first frame and the second frame-wise features of the second frame.

Converter 108 may connect the first node in the graph corresponding to the first frame and a second node in the graph corresponding to the second frame with a first edge based on the comparing or the comparison. The first edge may encode or represent the presence or existence of a relationship between the first node and the second node. The first edge may encode or represent a strength or extent of the relationship between the first node and the second node. Converter 108 may assign a first value (e.g., a weight) to the first edge based on the comparing or the comparison, which may represent the strength of the relationship and/or interaction between the first node and the second node. The first edge may be directional (e.g., forward, or backward). Converter 108 may connect the first node to the second node with a forward edge (e.g., going forward in time). Converter 108 may connect the second node to the first node with a backward edge (e.g., going backward in time). Converter 108 may connect the first node and the second node with an un-directed edge. Converter 108 may perform one or more comparisons for each pair of frame-wise features in the one or more frame-wise features 160 to produce graph 170.

The comparing or the comparison may include determining a distance between first frame-wise features 602 with second frame-wise features 604 (e.g., computing a Euclidean distance of the two vectors). The distance or a derivation thereof may be assigned as the first value for the first edge. The value may be higher if the distance is smaller (e.g., the value and the distance may have an inverse relationship). The comparing or the comparison may further include determining if the distance is sufficiently close-enough for an edge to be assigned between the two nodes (e.g., comparing the distance against a threshold). The comparing or the comparison may determine whether first frame-wise features 602 and second frame-wise features 604 are sufficiently similar, or sufficiently matches or corresponds to each other. The comparing or the comparison may include counting a number of features or feature embeddings having the same or close-enough/matching values (e.g., comparing pairs of features or feature embeddings at the same position in the first frame-wise features 602 and the second frame-wise features 604). The comparing or the comparison may further include determining if the count is sufficiently high enough for an edge to be assigned between the two nodes (e.g., comparing the count against a threshold). The count or a derivation thereof may be assigned as the first value for the first edge.

In some embodiments, the comparing or the comparison may include comparing pairs of features or feature embeddings at the same position in the first frame-wise features 602 and the second frame-wise features 604. In some cases, converter 108 may assign an edge for each pair of same or close-enough/matching values.

Individual features or feature embeddings in frame-wise features (e.g., vector of features or feature embeddings per frame) may correspond to different classes (e.g., action classes). For example, a first value in a first position in the vector of features or feature embeddings for a first frame (e.g., first frame-wise features 602) may correspond to a first class or provide an indication whether the first frame belongs to the first class. A second value in a second position in the vector of features or feature embeddings for the first frame (e.g., first frame-wise features 602) may correspond to a second class or provide an indication whether the first frame belongs to the second class. Nodes can be assigned to individual features or feature embeddings per frame. In some cases, separate nodes may be assigned to individual features or feature embeddings in each frame-wise features in the one or more frame-wise features 160 (as opposed to one node per frame).

A node may be assigned for each one of the individual features or feature embeddings in each frame. A node may be assigned for only the individual features or feature embeddings that are sufficiently present or have a sufficiently strong signal in the vector (e.g., a feature or feature embedding having a non-zero value or a sufficiently high enough value). A node may be assigned for each one of the top K number of features or feature embeddings having the highest values in the vector. For example, one or more nodes may be assigned to features in first frame-wise features 602. One or more nodes may be assigned to features in second frame-wise features 604.

Converter 108 may connect nodes representing features or feature embeddings in the same frame/timestamp with un-directed edges. Converter 108 may connect nodes representing a feature/feature embedding in a specific position in the vectors (e.g., a particular class) with an edge if the feature or feature embedding at the same position in the vectors is present in two different frames. Converter 108 may connect nodes based on a comparison of the pair of values corresponding to the particular feature or feature embedding at the same position in the vectors, and assign edges based on the comparison. The comparison may include comparing if the values are sufficiently close. The comparison may include determining an absolute value difference between the values and comparing the difference against a threshold. The difference may be assigned as the value for the edge. The value for the edge may be higher if the difference is smaller (e.g., the value and the difference may have an inverse relationship). Converter 108 may connect nodes using a forward edge (e.g., going forward in time). Converter 108 may connect nodes using a backward edge (e.g., going backward in time). Converter 108 may connect nodes using an un-directed edge. Converter 108 may assign an edge for each pair of nodes corresponding to particular feature or feature embeddings (e.g., at a particular position in the vector), for all feature or feature embeddings, to produce graph 170.

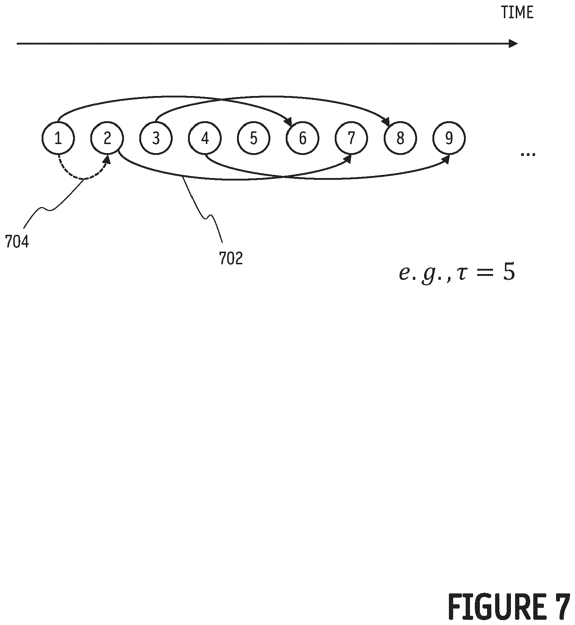

FIG. 7 illustrates exemplary temporal skip connections, according to some embodiments of the disclosure. In some cases, a converter may add one or more temporal skip connections to a graph. A temporal skip connection may connect two nodes separated by at least one frame and/or at least one timestamp. The number of frame(s) or timestamp(s) that separate the two nodes may be considered the size of the temporal skip connection. Edge 702 is an example of a temporal skip connection connecting node 2 and node 7, separated by 5 frames. Temporal skip connections, or intermediate-level temporal skip connections, may allow for message passing between non-adjacent nodes corresponding to non-adjacent frames. Edge 704 is not a temporal skip connection because edge 404 connects adjacent nodes corresponding to adjacent frames (e.g., node 1 is adjacent to node 2), not separated by any frames. Additional message passing channels such as temporal skip connections can allow a graph neural network better synthesize intermediate temporal information to improve predictive robustness, in particular in the case of over-segmentation and video frames representing action transitions. A converter (e.g., converter 108 as seen in FIGS. 1-2 and 6) can artificially add one or more temporal skip connections to the nodes. When no relationship exists between two nodes separated by a *τ* number of frames or timestamps, the converter can add one or more edges that connects the two nodes. *τ* can represent the size of the temporal skip connection. The edge can be a forward edge. The edge can be a backward edge. The edge can be an un-directed edge. The converter can add one or more edges in graph according to a predefined value *τ*. *τ* can be a hyperparameter that is adjustable or tunable or modulated by a user. The hyperparameter *τ* can define the size of the one or more (artificially) added temporal skip connections. In some cases, *τ* = 10. Nodes representing video frames separated by 10 frames may include an edge connection.

### Exemplary implementations of a graph neural network

FIG. 8 illustrates GNN 110 receiving graph 170 and generating predictions 112 on graph 170, according to some embodiments of the disclosure. Graph 170 may be input into GNN 110. As a graph 170 is processed by GNN 110, the nodes and their corresponding values may be updated using information from neighboring nodes. The edges may serve as channels for message passing or sharing of information between nodes connected by edges. The edges may have corresponding values which can weigh the information or message being passed between nodes. After being updated by GNN 110, the values corresponding to nodes, aⱼ (j representing a node index in graph 170), can represent predictions 112 made by GNN 110. In some cases, graph 170 has a node per frame or timestamp, and GNN 110 may generate one or more predictions per frame or timestamp.

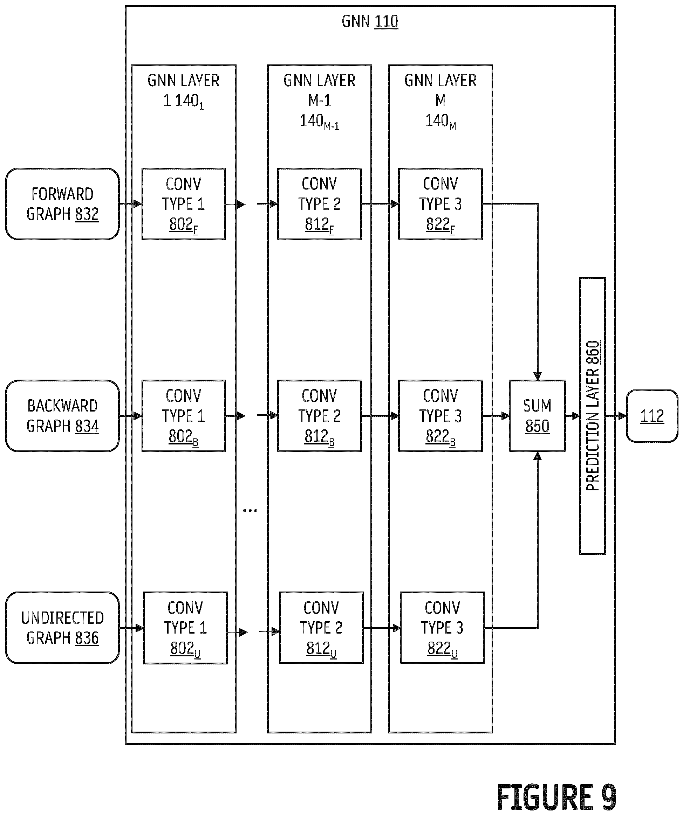

FIG. 9 illustrates an exemplary implementation of GNN 110 to generate predictions 112 on a graph, according to some embodiments of the disclosure. A graph, e.g., graph 170 as depicted in FIGS. 6 and 8, may be converted or transformed into two or more separate graphs. The separate graphs may be processed by GNN 110 in parallel. The graph may be converted into a forward graph 832 having nodes and forward edges only. The graph may be converted into a backward graph 834 having nodes and backward edges only. The graph may be converted into an un-directed graph 836 having nodes and un-directed edges only.

GNN 110 may include M number of layers, e.g., GNN layer 1 140₁, ..., GNN layer M-1 140_{M-1}, GNN layer M 140_{M}. Each layer may implement different types of processing or message aggregation (e.g., convolution types) on respective graphs. Layers may implement a mix or combination of types of processing or message aggregation (e.g., convolution types) to extract or generate information from respective graphs. Each layer may include (parallel) processing blocks dedicated to processing a particular graph. For example, GNN layer 1 140₁ may include type 1 convolution operator 802_{F} for processing forward graph 832. GNN layer 1 140₁ may include type 1 convolution operator 802₈ for processing backward graph 834. GNN layer 1 140₁ may include type 1 convolution operator 802u for processing un-directed graph 836. GNN layer M-1 140_{M-1} may include type 2 convolution operator 812_{F} for processing information extracted upstream from forward graph 832. GNN layer M-1 140_{M-1} may include type 2 convolution operator 812_{B} for processing information extracted upstream from backward graph 834. GNN layer M-1 140_{M-1} may include type 2 convolution operator 812u for processing information extracted upstream from un-directed graph 836. GNN layer M 140_{M} may include type 3 convolution operator 822_{F} for processing information extracted upstream from forward graph 832. GNN layer M 140_{M} may include type 3 convolution operator 812_{B} for processing information extracted upstream from backward graph 834. GNN layer M 140_{M} may include type 3 convolution operator 812_{U} for processing information extracted upstream from un-directed graph 836. Types of processing or message aggregation (e.g., convolution types) provided in the layers may not be limited to 3 different types.

In some embodiments, parameters or weights in the convolution operators in one or more intermediate layers, e.g., one or more layers in the collection of layers including GNN layer 2 through GNN layer M-1 (not GNN layer 1 140₁, and not GNN layer M 140_{M}), can be shared between different graphs. For example, the parameters or weights of type 2 convolution operator 812_{F}, type 2 convolution operator 812_{B}, and type 2 convolution operator 812_{U}, may be shared. Sharing parameters and/or weights may mean that the parameters and/or weights are the same, and during training, the parameters and/or weights are updated to have the same values. Sharing parameters and/or weights can create a message bottleneck. Sharing parameters and/or weights can help to generalize and avoid overfitting.

Different types of processing or message aggregation (e.g., convolution types) can include edge convolution/aggregation, attention convolution/aggregation, and sample and aggregate convolution/aggregation.

Edge convolution/aggregation can learn pair-wise interactions between nodes. Edge convolution/aggregation can model global and local structures by applying channel-wise symmetric aggregation operation on the edge features associated with all the edges emanating from each node. Edge convolution/aggregation can have many parameters and can be expressive. Edge convolution/aggregation may be suitable in the first layer in GNN 110 (e.g., GNN layer 1140₁). In some cases, all edges emanating from a node are aggregated.

Attention convolution/aggregation can utilize a self-attention mechanism between a node and its neighborhood. Attention convolution/aggregation can apply multi-head attention that can improve its modeling capacity. Attention convolution/aggregation may be particularly suitable in a layer that serves as a message bottleneck (e.g., an intermediate layer in GNN 110, GNN Layer M-1 140_{M-1}, etc.). Attention convolution/aggregation may aggregate edges emanating from a node based on the importance of the edge (e.g., aggregation may be weighted by the importance of the edges).

Sample and aggregate convolution/aggregation can have a computationally efficient form. Sample and aggregate convolution/aggregation can apply a learnable linear transformation with a non-linear activation function, which can be suitable for task-specific aggregation. Sample and aggregate convolution/aggregation may be particularly suitable for the last layer in GNN 110 (e.g., GNN layer M 140_{M}). Sample and aggregate convolution/aggregation may aggregate edges emanating from a node based on learned parameters about the node's neighborhood.

In some embodiments, M=3. The first layer may implement edge convolution/aggregation. The second layer may implement attention convolution/aggregation. Parameters or weights in the second layer may be shared between different graphs. The third layer may implement sample and aggregate convolution/aggregation.

In some embodiments, M=3. The first layer may implement sample and aggregate convolution/aggregation. The second layer may implement attention convolution/aggregation. Parameters or weights in the second layer may be shared between different graphs. The third layer may implement sample and aggregate convolution/aggregation.

Outputs from operators in the last GNN layer (e.g., type 3 convolution operator 822_{F}, type 3 convolution operator 822_{B}, and type 3 convolution operator 822u) may include respective graphs. The outputs, e.g., respective graphs, may be summed at summer 850. Summer 850 may sum, combine, or aggregate the respective values or sets of values produced by the different operators for a given node, e.g., node by node. The values corresponding to the nodes, e.g., action prediction logits, may be provided to prediction layer 860. Prediction layer 860 may apply a trained/learned activation function to produce predictions 112.

Predictions 112 may include per-node predictions. Predictions 112 may include per-frame predictions. Predictions 112 may include per-feature embedding/class per-frame prediction.

In some cases, summer 850 and prediction layer 860 may be replaced by a trained/learned layer that can fuse respective values produced by the different operators for a given node into a prediction for the given node. The trained/learned layer may be a projection layer. The trained/learned layer may have respective weights or parameters that can fuse, combine, sum, or aggregate the respective values according to the weights or parameters. The trained/learned layer may apply a weighted average function.

In some cases, summer 850 and prediction layer 860 may be replaced by a processing layer that can process respective values produced by the different operators for a given node and generate a prediction for each node. The processing layer may apply a max or maximum function. The processing layer may apply an average function. The processing layer may compute a mean of the respective values.

### Training and computing loss functions

Training data sets can include input videos where each frame of the training videos has one or more labeled classes.

FIG. 10 illustrates training and calculating a loss function for a temporal convolutional network, according to some embodiments of the disclosure. Training videos can be provided as input video 102. The final outputs of TCN 106 may be compared against labels in training data. A loss function can include cross-entropy loss *L_{CE}* and temporal smoothing loss *L_{T-MSE}.* Cross-entropy loss can measure whether the final outputs of TCN 106 was correct (using labels in training data). Temporal smoothing loss can measure jitteriness or smoothness in the final outputs of TCN 106 over time (and penalize the model for changing classifications too often because class predictions for action segmentation are expected to be smooth). Different contributions from cross-entropy and temporal smoothing to the loss function may be balanced or set by *α.* An optimizer (e.g., implementing Adam optimization) can update parameters of TCN 106 to minimize the loss function. Parameters 3D CNN 104 may be fixed or pre-trained.

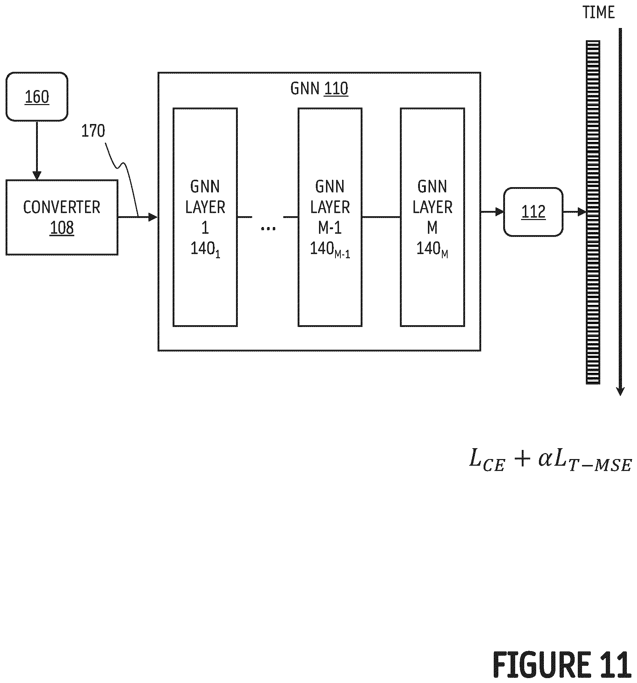

FIG. 11 illustrates training and calculating a loss function for a graph neural network, according to some embodiments of the disclosure. Training videos can be provided to a pre-trained model (e.g., 3D CNN 104 and TCN 106 of FIGS. 1-2) to generate one or more frame-wise features 160. The one or more frame-wise features 160 may be converted into graph 170 by converter 108. Graph 170 may be ingested by GNN 110. The final outputs of GNN 110 may be compared against labels in training data. A loss function can include cross-entropy loss *L_{CE}* and temporal smoothing loss *L_{T_MSE}.* Cross-entropy loss can measure whether the final outputs of GNN 110 was correct (using labels in training data). Temporal smoothing loss can measure jitteriness or smoothness in the final outputs of GNN 110 over time (and penalize the model for changing classifications too often because class predictions for action segmentation are expected to be smooth). Different contributions from cross-entropy and temporal smoothing to the loss function may be balanced or set by *α.* An optimizer (e.g., implementing Adam optimization) can update parameters of GNN 110 to minimize the loss function.

### Another exemplary method for making or generating one or more predictions

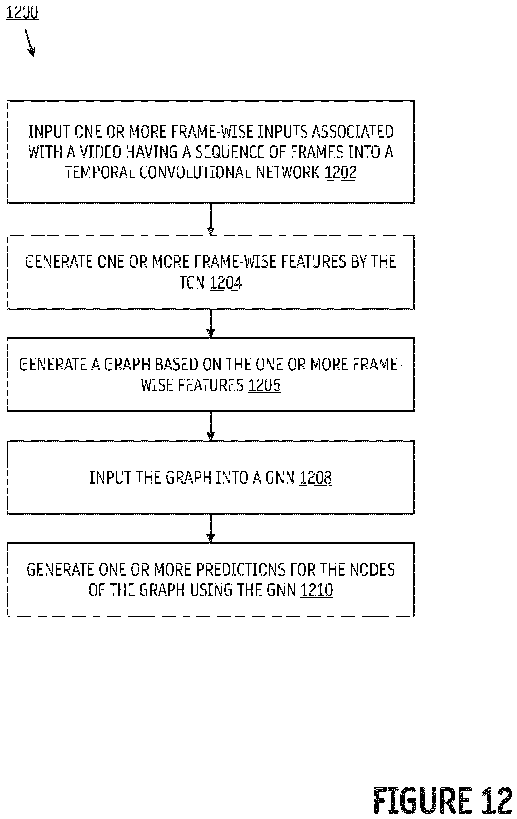

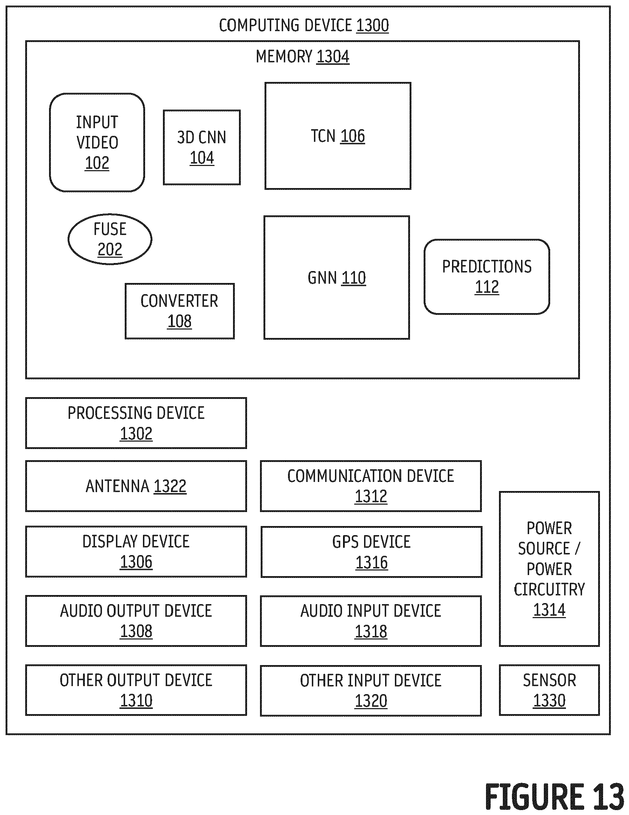

FIG. 12 is a flowchart showing method 1200 for making predictions, according to some embodiments of the disclosure. Method 1200 can be performed using a computing device, such as computing device 1300 in FIG. 13. Method 1200 may be performed using one or more parts illustrated FIGS. 1-2. In 1202, one or more frame-wise inputs associated with a sequence of frames may be input into a temporal convolutional network (e.g., TCN 106). The temporal convolutional network may process the one or more frame-wise inputs. In 1204, using the temporal convolutional network, one or more frame-wise features may be generated based on the one or more frame-wise inputs. The temporal convolutional network may extract or generate one or more frame-wise features. In 1206, a converter (e.g., converter 108) can generate a graph comprising one or more nodes and one or more edges based on the one or more frame-wise features. A node may correspond to a frame. The one or more nodes may correspond to the one or more frames. An edge can represent a connection between frame-wise features of two frames. The one or more edges can represent one or more connections, relationships, and/or interactions between frame-wise features of two frames. In 1208, the graph can be input into a graph neural network (e.g., GNN 110). In 1210, using the graph neural network, one or more predictions for the one or more nodes of the graph can be generated. The graph neural network can extract or generate the one or more predictions based on the graph.

### Exemplary computing device

FIG. 13 is a block diagram of an apparatus or a system, e.g., an exemplary computing device 1300, according to some embodiments of the disclosure. One or more computing devices 1300 may be used to implement the functionalities described with the FIGS. and herein. A number of components are illustrated in the FIGS. can be included in the computing device 1300, but any one or more of these components may be omitted or duplicated, as suitable for the application. In some embodiments, some or all of the components included in the computing device 1300 may be attached to one or more motherboards. In some embodiments, some or all of these components are fabricated onto a single system on a chip (SoC) die. Additionally, in various embodiments, the computing device 1300 may not include one or more of the components illustrated in FIG. 13, and the computing device 1300 may include interface circuitry for coupling to the one or more components. For example, the computing device 1300 may not include a display device 1306, and may include display device interface circuitry (e.g., a connector and driver circuitry) to which a display device 1306 may be coupled. In another set of examples, the computing device 1300 may not include an audio input device 1318 or an audio output device 1308 and may include audio input or output device interface circuitry (e.g., connectors and supporting circuitry) to which an audio input device 1318 or audio output device 1308 may be coupled.

The computing device 1300 may include a processing device 1302 (e.g., one or more processing devices, one or more of the same type of processing device, one or more of different types of processing device). The processing device 1302 may include electronic circuitry that process electronic data from data storage elements (e.g., registers, memory, resistors, capacitors, quantum bit cells) to transform that electronic data into other electronic data that may be stored in registers and/or memory. Examples of processing device 1302 may include a central processing unit (CPU), a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1300 may include a memory 1304, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1304 includes one or more non-transitory computer-readable storage media. In some embodiments, memory 1304 may include memory that shares a die with the processing device 1302. In some embodiments, memory 1304 includes one or more non-transitory computer-readable media storing instructions executable to perform operations described with the FIGS. and herein, such as the methods illustrated in FIGS. 12-15. Exemplary parts that may be encoded as instructions and stored in memory 1304 are depicted. Memory 1304 may store instructions that encode one or more exemplary parts. The instructions stored in the one or more non-transitory computer-readable media may be executed by processing device 1302. In some embodiments, memory 1304 may store data, e.g., data structures, binary data, bits, metadata, files, blobs, etc., as described with the FIGS. and herein. Exemplary data that may be stored in memory 1304 are depicted. Memory 1304 may store one or more data as depicted.

In some embodiments, memory 1304 may store one or more machine learning models (and or parts thereof). Memory 1304 may store input data, output data, intermediate outputs, intermediate inputs. Memory 1304 may store instructions to perform one or more operations of the machine learning model. Memory 1304 may store one or more parameters used by the machine learning model. Memory may store information that encodes how processing units are connected with each other. Examples of machine learning models or parts of a machine learning model may include machine learning model 100 of FIG. 1, machine learning model 200 of FIG. 2, 3D CNN 104, TCN 106, fusing block 202, converter 108, GNN 110, and predictions 112.

In some embodiments, the computing device 1300 may include a communication device 1312 (e.g., one or more communication devices). For example, the communication device 1312 may be configured for managing wired and/or wireless communications for the transfer of data to and from the computing device 1300. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1312 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1312 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1312 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1312 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1312 may operate in accordance with other wireless protocols in other embodiments. The computing device 1300 may include an antenna 1322 to facilitate wireless communications and/or to receive other wireless communications (such as radio frequency transmissions). The computing device 1300 may include receiver circuits and/or transmitter circuits. In some embodiments, the communication device 1312 may manage wired communications, such as electrical, optical, or any other suitable communication protocols (e.g., the Ethernet). As noted above, the communication device 1312 may include multiple communication chips. For instance, a first communication device 1312 may be dedicated to shorter-range wireless communications such as Wi-Fi or Bluetooth, and a second communication device 1312 may be dedicated to longer-range wireless communications such as global positioning system (GPS), EDGE, GPRS, CDMA, WiMAX, LTE, EV-DO, or others. In some embodiments, a first communication device 1312 may be dedicated to wireless communications, and a second communication device 1312 may be dedicated to wired communications.

The computing device 1300 may include power source / power circuitry 1314. The power source / power circuitry 1314 may include one or more energy storage devices (e.g., batteries or capacitors) and/or circuitry for coupling components of the computing device 1300 to an energy source separate from the computing device 1300 (e.g., DC power, AC power, etc.).

The computing device 1300 may include a display device 1306 (or corresponding interface circuitry, as discussed above). The display device 1306 may include any visual indicators, such as a heads-up display, a computer monitor, a projector, a touchscreen display, a liquid crystal display (LCD), a light-emitting diode display, or a flat panel display, for example.

The computing device 1300 may include an audio output device 1308 (or corresponding interface circuitry, as discussed above). The audio output device 1308 may include any device that generates an audible indicator, such as speakers, headsets, or earbuds, for example.

The computing device 1300 may include an audio input device 1318 (or corresponding interface circuitry, as discussed above). The audio input device 1318 may include any device that generates a signal representative of a sound, such as microphones, microphone arrays, or digital instruments (e.g., instruments having a musical instrument digital interface (MIDI) output).

The computing device 1300 may include a GPS device 1316 (or corresponding interface circuitry, as discussed above). The GPS device 1316 may be in communication with a satellite-based system and may receive a location of the computing device 1300, as known in the art.

The computing device 1300 may include a sensor 1330 (or one or more sensors). The computing device 1300 may include corresponding interface circuitry, as discussed above). Sensor 1330 may sense physical phenomenon and translate the physical phenomenon into electrical signals that can be processed by, e.g., processing device 1302. Examples of sensor 1330 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1300 may include another output device 1310 (or corresponding interface circuitry, as discussed above). Examples of the other output device 1310 may include an audio codec, a video codec, a printer, a wired or wireless transmitter for providing information to other devices, haptic output device, gas output device, vibrational output device, lighting output device, home automation controller, or an additional storage device.

The computing device 1300 may include another input device 1320 (or corresponding interface circuitry, as discussed above). Examples of the other input device 1320 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1300 may have any desired form factor, such as a handheld or mobile computer system (e.g., a cell phone, a smart phone, a mobile internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1300 may be any other electronic device that processes data.

### Select examples

Example 1 provides a method, including inputting one or more frame-wise inputs associated with a sequence of video frames into a temporal convolutional network; generating, using the temporal convolutional network, one or more frame-wise features based on the one or more frame-wise inputs; generating a graph including one or more nodes and one or more edges based on the one or more frame-wise features, where a node corresponds to a video frame, and an edge connecting two nodes represents a connection between frame-wise features of two video frames; inputting the graph into a graph neural network; and generating, using the graph neural network, one or more predictions for the one or more nodes of the graph.

Example 2 provides the method of example 1, where the one or more frame-wise inputs associated with a sequence of video frames includes a first frame-wise input including a first vector of features extracted from a first frame in the sequence of video frames; and a second frame-wise input including a second vector of features extracted from a second frame in the sequence of video frames.

Example 3 provides the method of example 1 or 2, where the one or more frame-wise inputs associated with a sequence of frames includes a first frame-wise input including a first frame in the sequence of video frames; and a second frame-wise input including a second frame in the sequence of video frames.

Example 4 provides the method of any one of examples 1-3, further including inputting the sequence of video frames into a three-dimensional convolutional neural network; and generating, using the three-dimensional convolution neural network, the one or more frame-wise inputs.

Example 5 provides the method of any one of examples 1-4, where generating the one or more frame-wise features based on the one or more frame-wise inputs includes standardizing feature dimensions of the one or more frame-wise inputs.

Example 6 provides the method of any one of examples 1-5, where generating the one or more frame-wise features based on the one or more frame-wise inputs includes applying one or more dilated convolutions with one or more dilation rates.

Example 7 provides the method of any one of examples 1-6, where the one or more frame-wise features are generated by a second-to-the-last layer of the temporal convolutional network.

Example 8 provides the method of any one of examples 1-7, where generating the graph further includes generating the graph further based on the one or more frame-wise inputs.

Example 9 provides the method of any one of examples 1-8, where generating the graph includes comparing first frame-wise features corresponding to a first video frame with second frame-wise features corresponding to a second video frame; and connecting a first node in the graph corresponding to the first video frame and a second node in the graph corresponding to the second video frame with a first edge based on the comparing.

Example 10 provides the method of any one of examples 1-9, where generating the graph includes comparing first frame-wise features corresponding to a first video frame with second frame-wise features corresponding to a second video frame; connecting a first node in the graph corresponding to the first video frame and a second node in the graph corresponding to the second video frame with a first edge; and assigning a first value to the first edge based on the comparing.

Example 11 provides the method of any one of examples 1-10, where generating the one or more predictions includes performing message aggregation operations on the graph.

Example 12 provides an apparatus, including one or more processors; and one or more storage devices storing a machine learning model having processing operations that are performed by the one or more processors, the machine learning model including a temporal convolutional network to receive one or more frame-wise inputs associated with a sequence of video frames, and output one or more frame-wise features; a converter to generate a graph including nodes and one or more edges based on the one or more frame-wise features, where a node corresponds to a video frame, and an edge connecting two nodes represents a connection between frame-wise features of two video frames; and a graph neural network to receive the graph, and output one or more predictions for the nodes.

Example 13 provides the apparatus of example 12, where the machine learning model further includes a three-dimensional convolutional neural network to receive the sequence of video frames, and output the one or more frame-wise inputs.

Example 14 provides the apparatus of example 12 or 13, where the temporal convolutional network includes one or more prediction stages to process the one or more frame-wise inputs; and one or more refinement stages to process outputs of the prediction stage.

Example 15 provides the apparatus of any one of examples 12-14, where the temporal convolutional network includes one or more convolution operators to receive one or more of the frame-wise inputs, a convolutional operator having a kernel size of 1x1.

Example 16 provides the apparatus of any one of examples 12-15, where the temporal convolutional network includes a plurality of dilated convolution layers, each layer including a plurality of processing blocks.

Example 17 provides the apparatus of example 16, where a processing block in the plurality of processing blocks of a dilated convolution layer in the plurality of dilated convolution layers includes an input path; a residual path including a dilated convolution block having a dilation rate; an activation block to process an output of the dilated convolution block; and a convolution block to process an output of the activation block, the convolution block having a kernel size of 1x1; and an adder block to sum an output of the input path and an output of the residual path.

Example 18 provides the apparatus of example 17, where the dilation rate depends on the dilated convolution layer in which the processing block is positioned.

Example 19 provides the apparatus of example 16, where a processing block in the plurality of processing blocks of a dilated convolution layer in the plurality of dilated convolution layers includes an input path; a residual path including a first dilated convolution block having a first dilation rate; a second dilated convolution block having a second dilation rate; a concatenate block to concatenate an output of the first dilated convolution block and an output of the second dilated convolution block; an activation block to process an output of the concatenate block; and a convolution block to process an output of the activation block, the convolution block having a kernel size of 1x1; and an adder block to sum an output of the input path and an output of the residual path.

Example 20 provides the apparatus of example 19, where the first dilation rate depends on the dilated convolution layer in which the processing block is positioned.

Example 21 provides the apparatus of example 19 or 20, where the second dilation rate depends on the dilated convolution layer in which the processing block is positioned.

Example 22 provides the apparatus of any one of examples 19-21, where the first dilation rate is different from the second dilation rate.

Example 23 provides the apparatus of any one of examples 12-22, where the temporal convolutional network includes a plurality of layers, and the one or more frame-wise features are generated by a second-to-the-last layer of the temporal convolutional network.

Example 24 provides the apparatus of any one of examples 12-23, where the machine learning model further includes a fusing block to receive and fuse the one or more frame-wise inputs and the one or more frame-wise features, and the converter is further to receive an output of the fusing block.

Example 25 provides the apparatus of any one of examples 12-24, where the graph has one or more forward edges and one or more backward edges.

Example 26 provides the apparatus of any one of examples 12-25, where the graph has one or more forward edges, one or more backward edges, and one or more un-directed edges.

Example 27 provides the apparatus of any one of examples 12-26, where an edge of the graph encodes a value that represents a comparison of frame-wise features between two video frames.

Example 28 provides the apparatus of any one of examples 12-27, where: the graph includes one or more temporal skip connections, where a temporal skip connection connects two nodes separated by at least one timestamp.

Example 29 provides the apparatus of example 28, where: a size of a temporal skip connection is a hyperparameter adjustable by a user.

Example 30 provides one or more non-transitory computer-readable media storing instructions that, when executed by one or more processors, cause the one or more processors to: process, by a temporal convolutional network, one or more frame-wise inputs associated with a sequence of video frames; extract, by the temporal convolutional network, one or more frame-wise features; generate a graph including one or more nodes and one or more edges based on the one or more frame-wise features, where a node corresponds to a video frame, and an edge connecting two nodes represents a connection between frame-wise features of two video frames; process, by a graph neural network, the graph; and generate, by the graph neural network, one or more predictions for the nodes.

Example 31 provides the one or more non-transitory computer-readable media of example 30, where the instructions that when executed by the one or more processors, cause the one or more processors further to perform any one of the methods provided in examples 2-11.

Example 32 provides an apparatus comprising means to carry out or means for carrying out any one of the computer-implemented methods provided in examples 1-11.

### Variations and other notes

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
inputting one or more frame-wise inputs associated with a sequence of video frames into a temporal convolutional network;
generating, using the temporal convolutional network, one or more frame-wise features based on the one or more frame-wise inputs;
generating a graph comprising one or more nodes and one or more edges based on the one or more frame-wise features, wherein a node corresponds to a video frame, and an edge connecting two nodes represents a connection between frame-wise features of two video frames;
inputting the graph into a graph neural network; and
generating, using the graph neural network, one or more predictions for the one or more nodes of the graph.

2. The method of claim 1, wherein the one or more frame-wise inputs associated with a sequence of video frames comprises:
a first frame-wise input comprising a first vector of features extracted from a first frame in the sequence of video frames; and
a second frame-wise input comprising a second vector of features extracted from a second frame in the sequence of video frames.

3. The method of claim 1 or 2, wherein the one or more frame-wise inputs associated with a sequence of frames comprises:
a first frame-wise input comprising a first frame in the sequence of video frames; and
a second frame-wise input comprising a second frame in the sequence of video frames.

4. The method of any one of claims 1-3, further comprising:
inputting the sequence of video frames into a three-dimensional convolutional neural network; and
generating, using the three-dimensional convolution neural network, the one or more frame-wise inputs.

5. The method of any one of claims 1-4, wherein the one or more frame-wise features are generated by a second-to-the-last layer of the temporal convolutional network.

6. The method of any one of claims 1-5, wherein generating the graph further comprises:
generating the graph further based on the one or more frame-wise inputs.

7. The method of any one of claims 1-6, wherein generating the graph comprises:
comparing first frame-wise features corresponding to a first video frame with second frame-wise features corresponding to a second video frame; and
connecting a first node in the graph corresponding to the first video frame and a second node in the graph corresponding to the second video frame with a first edge based on the comparing.

8. The method of any one of claims 1-7, wherein generating the graph comprises:
comparing first frame-wise features corresponding to a first video frame with second frame-wise features corresponding to a second video frame;
connecting a first node in the graph corresponding to the first video frame and a second node in the graph corresponding to the second video frame with a first edge; and
assigning a first value to the first edge based on the comparing.

9. An apparatus, comprising:
one or more processors; and
one or more storage devices storing a machine learning model having processing operations that are performed by the one or more processors, the machine learning model comprising:
a temporal convolutional network to receive one or more frame-wise inputs associated with a sequence of video frames, and output one or more frame-wise features;
a converter to generate a graph comprising nodes and one or more edges based on the one or more frame-wise features, wherein a node corresponds to a video frame, and an edge connecting two nodes represents a connection between frame-wise features of two video frames; and
a graph neural network to receive the graph, and output one or more predictions for the nodes.

10. The apparatus of claim 9, wherein the machine learning model further comprises:
a three-dimensional convolutional neural network to receive the sequence of video frames, and output the one or more frame-wise inputs.

11. The apparatus of claim 9 or 10, wherein the temporal convolutional network comprises:
one or more convolution operators to receive one or more of the frame-wise inputs, a convolutional operator having a kernel size of 1x1.

12. The apparatus of any one of claims 9-11, wherein the temporal convolutional network comprises:
a plurality of dilated convolution layers, each layer comprising a plurality of processing blocks.

13. The apparatus of claim 12, wherein a processing block in the plurality of processing blocks of a dilated convolution layer in the plurality of dilated convolution layers comprises:
an input path;
a residual path comprising:
a dilated convolution block having a dilation rate;
an activation block to process an output of the dilated convolution block; and
a convolution block to process an output of the activation block, the convolution block having a kernel size of 1x1; and
an adder block to sum an output of the input path and an output of the residual path.

14. The apparatus of claim 12, wherein a processing block in the plurality of processing blocks of a dilated convolution layer in the plurality of dilated convolution layers comprises:
an input path;
a residual path comprising:
a first dilated convolution block having a first dilation rate;
a second dilated convolution block having a second dilation rate;
a concatenate block to concatenate an output of the first dilated convolution block and an output of the second dilated convolution block;
an activation block to process an output of the concatenate block; and
a convolution block to process an output of the activation block, the convolution block having a kernel size of 1x1; and
an adder block to sum an output of the input path and an output of the residual path.

15. One or more non-transitory computer-readable media storing instructions that, when executed by one or more processors, cause the one or more processors to perform a method according to any one of claims 1-8.
